(19)

Europäisches
Patentamt
European
Patent Office
Office européen
des brevets

(11) **EP 2 730 601 A1**

(12) **EUROPEAN PATENT APPLICATION**
published in accordance with Art. 153(4) EPC

(43) Date of publication:
**14.05.2014 Bulletin 2014/20**

(21) Application number: **12807150.3**

(22) Date of filing: **06.07.2012**

(51) Int Cl.:
**C08G 63/183** (2006.01)    **B65D 1/00** (2006.01)
**C08G 63/88** (2006.01)

(86) International application number:
**PCT/JP2012/067279**

(87) International publication number:
**WO 2013/005823 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2011   JP 2011150681**

(71) Applicant: **Toyo Seikan Group Holdings, Ltd.
Shinagawa-ku,
Tokyo 1418627 (JP)**

(72) Inventors:
• **NAKAMURA, Kazuhiko**
  **Yokohama-shi**
  **Kanagawa 240-0062 (JP)**
• **YAMADA, Toshiki**
  **Yokohama-shi**
  **Kanagawa 240-0062 (JP)**

(74) Representative: **Raynor, Stuart Andrew
J A Kemp
14 South Square
Gray's Inn
London WC1R 5JJ (GB)**

(54) **ETHYLENE TEREPHTHALATE POLYESTER RESIN FOR FORMING CONTAINER, AND METHOD FOR PRODUCING SAME**

(57)    An ethylene terephthalate type polyester resin for forming containers, having an intrinsic viscosity in a range of 0.80 to 0.90 dL/g, containing copolymerizable components other than the ethylene glycol and terephthalic acid in an amount of less than 1.5 mol%, containing monohydroxyethyl terephthalate and bishydroxyethyl terephthalate in a total amount of less than 0.005% by weight, and having a heat of fusion of not more than 50 J/g and a crystallinity of less than 60%. The ethylene terephthalate type polyester resin has a high intrinsic viscosity, excellent stretch formability and excellent melting property.

EP 2 730 601 A1

**Description**

Technical Field:

This invention relates to an ethylene terephthalate type polyester resin for forming containers and to a method of producing the same. More specifically, the invention relates to an ethylene terephthalate type polyester resin for forming containers, which has a high intrinsic viscosity, contains low molecular components in decreased amounts, can be excellently melted and enables the containers to be stretch-blow-formed maintaining stability, and to a method of producing the same resin.

Background Art:

Containers obtained by stretch-forming a thermoplastic polyester resin such as polyethylene terephthalate have excellent transparency and surface luster, have impact resistance, rigidity and gas-barrier property required for the containers such as cups, and have been used as containers for a variety of kinds of beverages and foods.

Among the polyester resins, the homopolyethylene terephthalate is more highly crystalline than the ethylene terephthalate type polyester resins containing copolymerizable components, and has an advantage in that it can be easily oriented and crystallized when it is being stretch-blow-formed.

Specifically, the homopolyethylene terephthalate having a high intrinsic viscosity can be stretch-blow-formed under a condition of a higher temperature than that for those having low intrinsic viscosities, and makes it possible to stretch-form the containers having high heat resistance and large mechanical strength.

However, pellets of the homopolyethylene terephthalate having a high intrinsic viscosity also have a high crystallinity and, therefore, do not easily melt. Therefore, there arose such problems that if a large shearing force is exerted at the time of melt-forming, the forming machine often undergoes overshooting, that there are formed low-melting oligomer components such as monohydroxyethyl terephthalate (hereinafter often referred to as MHET) or bishydroxyethyl terephthalate (hereinafter often referred to as BHET), cyclic oligomer components such as cyclic trimer and volatile low-molecular components such as acetaldehyde due to the resin that is deteriorated by the heat produced by the shearing force, and that the unmelted components remaining in the melted resin work as a crystal nucleating agent causing the formed articles to be whitened.

If the containers are formed by using the polyester resin that contains the oligomer components and volatile low-molecular components in large amounts, it becomes difficult, in the case of the compression forming, to properly feed the molten resin masses to the cavities due to the MHET or BHET adhered to the drop-conveying metal molds, and the productivity decreases. In the case of the injection forming, on the other hand, oligomer components such as cyclic trimer and the like clog the air-vent ports of the metal molds via the MHET or BHET, and the cleaning operation must be conducted frequently. At the time of heat setting that is executed for imparting heat resistance to the containers, further, the cyclic trimer adhered on the surfaces of the metal molds via the MHET or BHET becomes a cause of transferring ruggedness to the surfaces of the containers arousing such problems as decreased transparency and making it necessary to frequent clean the metal molds. Besides, formation of the acetaldehyde in large amounts may spoil flavor-retaining property of the containers.

Attempts have also been made to reduce the defects of the polyester resin without impairing its inherent advantages. The present inventors, for instance, have proposed a polyester resin having an intrinsic viscosity in a range of 0.65 to 0.80 dL/g, containing monohydroxyethyl terephthalate and bishydroxyethyl terephthalate in a total amount of less than 0.005% by weight, having an acetaldehyde concentration of 2 to 10 ppm, a peak time of crystallization of not longer than 360 seconds in the isothermal crystallization at 210°C and a crystallization energy ($\Delta H$) of not less than 30 J/g, which is obtained by heat-treating an ethylene terephthalate type polyester resin, after it has been melt-polymerized, at a temperature of 160 to 220°C for not less than one hour but less than 5 hours, and which is suited for the production of heat resistant containers (patent document 1).

The present inventors have also proposed a polyester resin having an intrinsic viscosity in a range of 0.65 to 0.85 dL/g, containing monohydroxyethyl terephthalate and bishydroxyethyl terephthalate in a total amount of less than 0.005% by weight, having a heat of fusion of not more than 50 J/g, a melting point end temperature of not higher than 270°C and a crystallinity of less than 0.48, which was obtained by the same heat treatment as the one described above (patent document 2).

Prior Art Documents:

Patent Documents:

Patent document 1: JP-A-2010-150488
Patent document 2: JP-A-2010-150487

Outline of the Invention:

Problems that the Invention is to Solve:

The above polyester resins are the ethylene terephthalate type polyester resins containing low-melting oligomer components such as MHET and BHET in small amounts, having excellent melting property and being suited for forming heat resistant containers. However, these polyester resins are the ones obtained by the melt polymerization, have relatively low intrinsic viscosities, and are inferior in their stretch formability to the ethylene terephthalate type polyester resins having high intrinsic viscosities. Therefore, it has been desired to provide a polyester resin having further improved stretch formability.

It is, therefore, an object of the present invention to provide an ethylene terephthalate type polyester resin which features excellent melting property yet having a high intrinsic viscosity and, further, features excellent stretch formability.

According to the present invention, there is provided an ethylene terephthalate type polyester resin for forming containers, having an intrinsic viscosity in a range of 0.80 to 0.90 dL/g, containing monohydroxyethyl terephthalate and bishydroxyethyl terephthalate in a total amount of less than 0.005% by weight, and having a heat of fusion of not more than 50 J/g and a crystallinity of less than 60%.

In the ethylene terephthalate type polyester resin of the present invention, it is desired that:

1. The content of the copolymerizable components other than the ethylene glycol and terephthalic acid is less than 1.5 mol%; and

2. The total amount of the diethylene glycol and isophthalic acid contained as the copolymerizable components is less than 1.5 mol%.

According to the present invention, further, there are provided a preform comprising the above ethylene terephthalate type polyester resin for forming containers, and a blow-formed bottle formed by stretch-blowing the preform.

According to the present invention, further, there is provided a method of producing an ethylene terephthalate type polyester resin by melt-extruding and pelletizing an ethylene terephthalate type polyester resin having an intrinsic viscosity in a range of 0.80 to 0.90 dL/g obtained by the solid phase polymerization at a temperature $T(°C)$ of $Tm + 10 \leqq T \leqq Tm + 30$ with the melting point $Tm(°C)$ of the ethylene terephthalate type polyester resin as a reference, and heat-treating the pellets at a temperature of 160 to 220°C for not less than one hour but less than 5 hours. In the method of producing the ethylene terephthalate type polyester resin of the invention, it is desired that: 1. The heat treatment heat-treats the pellets at a temperature of 180 to 200°C for 3 to 4 hours; and 2. The ethylene terephthalate type polyester resin obtained by the solid phase polymerization is a polyethylene terephthalate that contains the copolymerizable components other than the ethylene glycol and terephthalic acid in an amount of less than 1.5 mol%.

Effects of the Invention:

The ethylene terephthalate type polyester resin (hereinafter often referred to as PET resin) of the present invention is a homopolyethylene terephthalate which is as pure as possible, and is more highly crystalline than the ethylene terephthalate type polyester resin containing copolymerizable components and has an advantage that it can be easily oriented and crystallized during the stretch-blow forming.

Specifically, the PET resin of the invention has an intrinsic viscosity of as high as 0.80 to 0.90 dL/g, and can be stretch-blow-formed under a condition of a temperature higher than a temperature for those having low intrinsic viscosities, making it possible to stretch-form the containers having a large mechanical strength and excellent heat resistance.

Further, the PET resin of the invention contains little oligomer components such as MHET or BHET that have low melting points and are presumed to cause sticking. Therefore, the PET resin of the invention is almost free from such problems that the formability decreases due to adhesion of the resin masses on the surfaces of the conveyer metal molds during the compression forming, that the oligomer components such as cyclic trimers and the like clog the air-vent ports of the metal molds during the injection forming necessitating frequent cleaning operation, that the cyclic trimer adheres on the surfaces of the metal molds during the heat setting causing the surfaces to be roughened and, therefore, deteriorating transparency, or that the metal molds must be frequently cleaned. Moreover, the PET resin of the invention has excellent melting property suppressing the formation of the acetaldehyde caused by the thermal deterioration during the melt forming and, therefore, features excellent flavor-retaining property.

Further, the PET resin of the invention has a heat of fusion of not more than 50 J/g and a crystallinity of less than 60%, which is an improvement from poor melting property specific to the pellets of a polyester resin having a high intrinsic viscosity. Therefore, no high shearing force is exerted that causes overshooting at the time of melt-forming, and productivity can be improved. This, further, effectively eliminates the problem in that unmolten components remaining in the molten resin become a nucleating agent causing the formed articles to become whitened.

Further, the amount of the copolymerizable components other than the ethylene glycol and terephthalic acid is less than 1.5 mol%. Specifically, when the isophthalic acid is contained to improve the PET resin and the diethylene glycol that is formed as by-product during the synthesis of the PET resin, the content thereof remains to be less than 1.5 mol%. Namely, there is obtained the homo-PET resin which is as pure as possible featuring a high crystallinity and making it possible to attain the orientation and crystallization to a high degree through the stretch-blow forming. Besides, the PET resin having a high intrinsic viscosity can be stretch-blow formed under a condition of a temperature higher than a temperature for the PET resins of low intrinsic viscosities, and makes it possible to stretch-form the containers having excellent heat resistance and mechanical strength.

In the method of producing a PET resin of the invention, further, the pellets of the PET resin having a high intrinsic viscosity obtained by the solid phase polymerization are melt-extruded at a predetermined temperature to improve the melting property of the pellets of the PET resin having high intrinsic viscosity. Next, the PET resin pelletized again by the melt-extrusion treatment is heat-treated at a predetermined temperature to decrease the content of the low molecular components such as MHET, BHET, acetaldehyde and the like.

The above-mentioned effects of the PET resin of the invention will also become obvious from the results of Examples appearing later.

Namely, it is obvious that the stretch-blow-formed container comprising the PET resin of the invention prepared by the production method of the invention contains in decreased amounts the MHET and BHET that become a cause of surface fouling on the metal molds and also contains in small amounts the acetaldehyde that impairs the flavor-retaining property of the container. It is, further, obvious that due to a small heat of fusion, low crystallinity and excellent melting property, the resin is thermally deteriorated little during the melt forming, and excellent stretch formability is attained due also to a high intrinsic viscosity (Examples 1 to 4).

With the PET resin having an intrinsic viscosity lying in the range of the present invention but prepared by a conventional production method, on the other hand, the metal molds were little fouled because the amounts of the MHET and BHET were small, and excellent stretch formability was attained accompanied, however, by poor flavor-retaining property due to large heat of fusion and high crystallinity and, therefore, due to the formation of the acetaldehyde as a result of thermal deterioration of the PET resin during the melt formation (Comparative Example 3).

Further, with the PET resin having an intrinsic viscosity lower than the range of the present invention, the stretch formability was poor due to the low intrinsic viscosity. Besides, the PET resin underwent thermal deterioration during the melt forming giving rise to the formation of the MHET and BHET, and the metal molds tended to be easily fouled (Comparative Example 4).

When the PET resin having an intrinsic viscosity lying in the range of the present invention but prepared by the conventional production method was melt-extruded and pelletized again at a predetermined temperature but was not heat-treated, the heat of fusion and the crystallization remained within the ranges of the present invention, but the MHET and BHET were formed in large amounts to foul the metal molds (Comparative Example 1).

Moreover, when the PET resin having an intrinsic viscosity lying in the range of the present invention but prepared by the conventional production method was heat-treated but without being melt-extruded at the predetermined temperature, satisfactory results were obtained concerning the stretch formability and not fouling the surfaces of the metal molds. However, the heat of fusion and crystallinity were so high that the PET resin underwent thermal deterioration during the melt formation, and the acetaldehyde was formed to deteriorate the flavor-retaining property (Comparative Example 2).

Modes for Carrying Out the Invention:

(Synthesis of the polyester resin)

The ethylene terephthalate type polyester resin (PET resin) of the present invention can be prepared by a conventional method of synthesizing polyester resins but conducting the melt-extrusion treatment and heat treatment that will be described later after the solid phase polymerization so that the intrinsic viscosity lies in a range of 0.80 to 0.90 dL/g, the total amount of the monohydroxyethyl terephthalate and bishydroxyethyl terephthalate is less than 0.005% by weight, the heat of fusion is not more than 50 J/g and the crystallinity is less than 60%.

That is, the PET resin of the invention is obtained by melt-polymerizing, in the presence of a catalyst, a starting material which chiefly comprises a terephthalic acid or an ester-forming derivative thereof and an ethylene glycol or an ester-forming derivative thereof, followed by the solid phase polymerization.

[Melt-polymerization]

The PET resin is, usually, synthesized by a method of synthesizing a polyethylene terephthalate (PET) by directly reacting a highly pure terephthalic acid (TPA) with an ethylene glycol (EG). The method of synthesis, usually, includes two steps, i.e., a step (A) of reacting the TPA with the EG to synthesize the BHET or a lowly polycondensed product thereof and a step (B) of executing the polycondensation by removing the ethylene glycol from the BHET or the lowly polycondensed product thereof.

The BHET or the lowly polycondensed product thereof can be synthesized under the conditions known per se. For instance, the esterification is carried out by selecting the amount of the EG to be 1.1 to 1.5 mols times as great as that of the TPA, and heating the reaction system at not lower than a boiling point of the EG, for example, at a temperature of 220 to 260°C while removing water out of the system under a pressure of 1 to 5 kg/cm$^2$. In this case, usually, no catalyst is necessary since the TPA itself serves as a catalyst. It is, however, also allowable to use an esterification catalyst known per se.

In the second step of polycondensation, a known polycondensation catalyst is added to the BHET or the lowly polycondensed product thereof obtained in the first step and, thereafter, the pressure is gradually decreased while maintaining the reaction system at 260 to 290°C followed, finally, by stirring under a pressure reduced down to 1 to 3 mmHg to carry out the reaction while removing the EG that is formed out of the system. The molecular weight is detected relying on the viscosity of the reaction system. After a predetermined value is reached, the resin is blown out of the system, and is cooled and formed into chips thereof. As the polycondensation catalyst, in general, there can be used germanium compounds such as germanium dioxide and the like, titanium compounds such as tetraethyl titanate and the like, and antimony compounds such as antimony trioxide and the like. Among them, however, use of the titanium compound or antimony compound is desired from the standpoint of efficiency in the polycondensation reaction and economy.

The PET resin obtained by melt-polymerization, usually, has an intrinsic viscosity of 0.5 to 0.8 dL/g. The PET resin that is pelletized after the melt-polymerization can be crystallized by the heat treatment based on the fluidized bed or the fixed bed by using a heated inert gas such as heated nitrogen gas, or by the heat treatment in a vacuum heating furnace. When the heated inert gas is used, the oxygen concentration in the heating vessel is set to be not more than 15% to prevent the pellets from developing yellow color. Desirably, the heat treatment is conducted in a temperature range of, usually, 130 to 155°C and, specifically, 140 to 150°C for a period in a range of 130 to 200 minutes and, specifically, 150 to 180 minutes.

[Solid phase polymerization]

Next, the pellets of the crystallized PET are polymerized in solid phase. In the solid phase polymerization unlike in the melt polymerization, the low molecular components such as MHET, BHET and acetaldehyde are formed in decreased amounts with an increase in the intrinsic viscosity. In general, further, the contents of the MHET and BHET decrease with an increase in the temperature of solid phase polymerization or with an increase in the polymerization time. Usually, it is desired to conduct the solid phase polymerization at a temperature of 200 to 230°C for 2 to 20 hours. The heating at the time of solid phase polymerization can be conducted in the same manner as that of crystallizing the pellets but maintaining the temperature to lie in the above range. The PET resin undergoes the crystallization to some extent during the solid phase polymerization, too.

It is important that the ethylene terephthalate type polyester resin of the invention is a homopolyethylene terephthalate that contains the ester units other than the ethylene terephthalate unit in amounts as small as possible from the standpoint of imparting excellent stretch formability. Concretely, it is desired that the content of the copolymerizable components other than the ethylene glycol and terephthalic acid is less than 1.5 mol% and, specifically, when the diethylene glycol and isophthalic acid are contained, the content thereof is less than 1.5 mol%.

As the copolymerizable components, though not limited thereto only, there can be exemplified, as dicarboxylic acid components, aromatic dicarboxylic acids such as phthalic acid, naphthalenedicarboxylic acid, etc., alicyclic dicarboxylic acids such as cyclohexanedicarboxylic acid, etc., and aliphatic dicarboxylic acids such as succinic acid, adipic acid, sebacic acid and dodecanedioic acid, which can be used in one kind or in a combination of two or more kinds and, as diol components, propylene glycol, 1,4-butanediol, 1,6-hexylene glycol, cyclohexanedimethanol and ethylene oxide adduct of bisphenol A, which can be used in one kind or in two or more kinds.

It is desired that the PET resin of the present invention is a homo-PET resin containing ester units other than the ethylene terephthalate unit in amounts as small as possible. It is, therefore, desired that the PET resin of the invention has a glass transition point (Tg) of 50 to 90°C, specifically, 60 to 80°C, and a melting point (Tm) of 200 to 270°C and, specifically, 250 to 270°C.

[Melt-extrusion treatment]

In the invention, the PET resin having an intrinsic viscosity of 0.80 to 0.90 dL/g obtained by the solid phase polymerization is melt-extruded and pelletized at a temperature T(°C) of Tm + 10 $\leqq$ T $\leqq$ Tm + 30 with the melting point Tm(°C) of the PET resin as a reference.

Upon melting again the PET resin having a high intrinsic viscosity obtained by the solid phase polymerization to render it amorphous, it is allowed to improve the melting property, to lower the heat of fusion to be not more than 50J/g and to lower the crystallinity to be less than 60%.

In the invention, further, it is desired to subject the pellets obtained by the melt-extrusion treatment to the crystallization treatment at a temperature of as low as 130 to 155°C and, specifically, 140 to 150°C for 150 to 180 minutes so that the pellets will not be melt-adhered together in a heat treatment that will be described later. The method of crystallization treatment is the same as the above-mentioned crystallization executed after the melt polymerization but before the solid phase polymerization. Here, however, it is desired that the crystallization treatment is conducted under the above-mentioned heating conditions so that the crystallinity will not too increase to impair the melting property.

[Heat treatment]

The pellets formed by the melt-extrusion treatment contains the MHET and BHET formed at the time of extruding the PET resin as well as the low molecular components such as acetaldehyde and the like. In the invention, the pellets of the crystallized polyester resin are heat-treated in vacuum or in an inert gas atmosphere at a temperature of 160 to 220°C, specifically, 180 to 200°C for not less than one hour but less than 5 hours and, specifically, for 3 to 4 hours to remove the low molecular components. If the heating temperature is lower than the above range, the low molecular components cannot be decreased to a sufficient degree. If the heating temperature is higher than the above range, on the other hand, it becomes probable that the resin is gelled, the intrinsic viscosity of the resin so increases as to impair the melt formability or the crystallinity of the resin pellets so increases as to deteriorate the melting property. Further, if the heating time exceeds 5 hours, the content of the low molecular components reaches the equilibrium. Namely, the treatment for a too long time rather decreases the productivity.

Like that of the crystallization executed above after the melt polymerization but before the solid phase polymerization, the heat treatment can be executed based on the fluidized bed or the fixed bed by using a heated inert gas such as heated nitrogen gas or can also be executed in a vacuum heating furnace. When the heated inert gas is used, it is desired that the oxygen concentration in the heating vessel is maintained to be not more than 15% to prevent the pellets from developing yellow color.

The heat treatment makes it possible to decrease the amounts of the MHET and BHET that are causes of adhesion onto the surfaces of the metal molds to less than 0.005% by weight and to decrease the amounts of volatile low molecular components such as acetaldehyde and the like that cause the flavor-retaining property to be deteriorated.

The heat treatment conducted in the method of producing the polyester resin of the present invention does not almost cause a rise in the intrinsic viscosity unlike that in the solid phase polymerization. As a result, the polyester resin of the present invention maintains the intrinsic viscosity of 0.80 to 0.90 dL/g after the solid phase polymerization making it possible to realize excellent stretch formability.

If the intrinsic viscosity is lower than the above range, the desired stretch formability cannot be attained. If the intrinsic viscosity is higher than the above range, on the other hand, the molten resin is poorly extruded, the formability decreases and scratches may be formed during the compression forming being caused by a cutter mark. Besides, the melt viscosity becomes high to easily receive the shearing of the screw. Therefore, it becomes difficult to suppress the acetaldehyde content in the container and the thermal deterioration of the resin caused by the melt forming to be lower than the desired values.

Further, the PET resin of the invention obtained as described above features excellent melting property having the crystallinity of less than 60% and, specifically, in a range of 50 to 58% and the heat of fusion of not more than 50 J/g and, specifically, 40 to 45 J/g, making it possible to form the containers having excellent quality maintaining stability and to produce the containers economically and highly productively.

(Preform)

The preform of the present invention can be formed by the known compression forming or the injection forming but using the above-mentioned PET resin.

As described above, the PET resin of the present invention is a homo-PET resin that contains the ester units other than the ethylene terephthalate unit in amounts as small as possible and has a high intrinsic viscosity featuring, therefore, excellent stretch formability. Moreover, the PET resin of the invention little contains the volatile low molecular components such as acetaldehyde and the like that cause a decrease in the flavor-retaining property, excels in the melting property and suppresses the thermal deterioration at the time of the melt forming. Accordingly, the preform comprising the PET resin of the present invention makes it possible to provide the containers having good flavor-retaining property yet featuring further improved heat resistance and mechanical strength.

In forming the preform by the compression forming, the PET resin of the invention in a molten state is continuously extruded by an extruder, and is cut by a cutting means (cutter) of a synthetic resin feeding apparatus to produce a molten resin mass (drop) which is a precursor in the molten state for forming the preform. The molten resin mass is then held by a holding means (holder), is thrown through a guide means (throat) into a cavity mold of a compression-forming machine, is, thereafter, compression-formed in a core mold, and is cooled and solidified to form the preform.

When the preform is formed by the injection forming, no limitation is specifically imposed on the injection conditions but, usually, the injection is conducted at a temperature of 260 to 300°C under a pressure of 30 to 60 kg/cm$^2$ to form the preform having a bottom.

In the production of the preform, it is desired that the molten PET resin has a melt extrusion temperature in a range of Tm + 5 to Tm + 40°C and, specifically, Tm + 10 to Tm + 30°C with the melting point (Tm) of the PET resin as a reference from the standpoint of forming a uniformly melt-extruded product and preventing the thermal deterioration or draw-down of the resin.

Further, it is specifically desired that the molten resin is kneaded in an extruder while venting. This suppresses the melt-extruded product from sticking that is caused by the formation of oligomer components such as MHET and BHET and, therefore, effectively prevents the adhesion of oligomer components on the air-vent ports of the conveyer metal molds or of the metal molds of the compression-forming machine.

The preform of the present invention can be stretch-blow-formed into stretch-formed containers such as bottles, wide-mouthed cups and the like.

In the stretch-blow forming, the preform formed from the PET resin of the invention is heated at a stretching temperature, and is stretched in the axial direction as well as in the circumferential direction to produce a biaxially-stretched container.

Forming the preform and its stretch-blow forming can be carried out by the hot parison system which executes the stretch-blow forming without completely cooling the preform in addition to the cold parison system. Prior to conducting the stretch-blow forming, the preform is, as required, preheated to a temperature suited for stretching by such means as hot air, infrared-ray heater or high-frequency induction heating. Specifically, to impart large heat resistance and mechanical strength to the stretch-formed container, the temperature range, in the case of the PET resin, is 85 to 130°C and, specifically, 100 to 120°C.

The preform is fed to a known stretch-blow-forming machine, set in the metal mold, stretched in the in the axial direction by introducing a stretch rod therein and is stretch-formed in the circumferential direction by blowing a fluid therein. The temperature of the metal mold is, usually, in a range of room temperature to 230°C, but is, desirably, set to be 120 to 180°C if the heat-set is to be conducted by a one-molding method that will be described later.

The PET resin container is finally stretched suitably at a ratio of 1.5 to 25 times in terms of the area ratio, i.e., stretched at a ratio of 1.2 to 6 times in the axial direction and is stretched 1.2 to 4.5 times in the circumferential direction.

The PET resin of the invention contains the MHET and BMET in a total amount of as small as less than 0.005% by weight. Therefore, no cyclic trimer deposits on the surfaces of the metal molds during the heat-set, transparency is not deteriorated that is caused by the roughened skin, the metal molds do not have to be frequently cleaned, and the heat-set can be conducted maintaining good productivity. The heat-set can be conducted by a known means, i.e., can be conducted by a two-molding method in a metal mold for heat-set separate from the metal mold for blow-forming. The temperature for the heat-set is in a range of, suitably, 120 to 230°C.

EXAMPLES

The invention will now be described by way of Examples to which only, however, the invention is in no way limited. Properties appearing in Examples were evaluated and measured in compliance with the methods described below.

1. Measuring the PET resin pellets.

(1) Intrinsic viscosity (IV).

There were weighed 0.3 g each of the pellets dried at 150°C for 4 hours and the mouth portion of the bottle, and to which was added a mixed solvent of 1,1,2,2-tetrachloroethane and phenol (weight ratio of 1/1) to adjust the concentrations thereof to be 1.00 g/dl followed by stirring at 120°C for 20 minutes so that they were completely dissolved therein. The solutions after they have been dissolved therein were cooled down to room temperature, and were measured for their relative viscosities by using a relative viscometer (Viscotek, Y501) of which the temperature was adjusted to be 30°C to determine intrinsic viscosities thereof.

(2) Contents of the MHET and BHET.

There were weighed 0.5 g each of the PET resin pellets and the mouth portion of the bottle, and to which was added 30 ml of a mixed solvent of hexafluoroisopropanol and chloroform (weight ratio of 1/1) so that they were completely dissolved therein. To the solution was added 20 ml of chloroform and, thereafter, 300 ml of tetrahydrofuran was gradually added. The mixture thereof was left to stand for 4 hours to let the PET polymer precipitated. The suspension thereof was filtered, and the filtrate was concentrated by using an evaporator to a point of just before it was dried and solidified. To the concentrated solution was added 5 ml of dimethylformamide (DMF) and after the mixture thereof was left to stand overnight, the DMF was added thereto in a messflask so that the amount of the mixed solution thereof was 10 ml. The solution was filtered through a membrane filter of a pore diameter of 0.45 $\mu$m, and the filtrate was measured by using a high-speed liquid chromatography. At the same time, the standard solution was measured, too, and the total amounts of the MHET and BHET in the pellets and in the bottle were calculated based on the calibration curve that was obtained.

(3) Content of the acetaldehyde.

1.0 Gram of the pulverized sample of the mouth portion of the bottle pulverized by a freeze-pulverizing machine was weighed and put into a glass bottle and was sealed therein while adding 5.0 ml of pure water thereto. The suspension thereof was heated in an oven heated at 120°C for 60 minutes and was, thereafter, cooled in the iced water. Three milliliters of the supernatant solution of the suspension was picked up and to which was added 0.6 ml of a 2,4-dinitrophenylhydrazine phosphoric acid solution of a concentration of 0.1%, and the mixture thereof was left to stand for 30 minutes. After left to stand, the supernatant solution thereof was filtered by using a membrane filter of 0.45 $\mu$m and the filtrate was measured by using the high-speed liquid chromatography. At the same time, the standard solution was measured, and the contents of the acetaldehyde in the pellets and in the bottle were calculated based on the obtained calibration curve. The flavor-retaining property of the bottle was evaluated to be "○" when the content of the acetaldehyde in the bottle was not more than 10 ppm and "X" when the content thereof exceeded 10 ppm.

(4) Crystallinity of the PET resin pellets.

The crystallinity was found in compliance with the following densitometric method.

$$\mathtt{Crystallinity} \ \chi_c = \{[\rho c \ x \ (\rho - \rho a)]/[\rho \ x \ (\rho c - \rho a)]\}$$

p: measured density (g/cm$^3$)
$\rho$a: amorphous density (1.335 g/cm$^3$)
$\rho$c: crystalline density (1.455 g/cm$^3$)
Here, the density was measured by using a density-gradient tube of the type of calcium nitrate solution (Ikeda Rika Co.) under a condition of 20°C.

(5) Differential scanning calorimetry (DSC).

The heat of fusion ($\Delta H_{Tm}$) of the PET resin pellets was measured by using a differential scanning calorimeter (Diamond DSC, PerkinElmer Co.). 8 Milligrams of the PET resin pellet was weighed and used as a sample.
The measuring conditions were as follows:

　　Step 1: Maintained at 25°C for 3 minutes.
　　Step 2: The temperature was elevated from 25°C up to 290°C at a rate of 10°C/min.

The heat of fusion $\Delta H_{Tm}$ was found from the area of melting peak at the step 2.

2. Melt-extrusion treatment of the resin pellets.

The resin pellets were melt-extruded by using a twin screw extruder (TEM 26SS manufactured by Toshiba Kakai Co.). The extrusion temperature was 280°C, the screw revolving speed was 100 rpm and the ejection rate was 10 kg/h. The molten resin ejected in a stranded manner from the extruder was cooled with the air while being conveyed by a belt conveyer, and was pelletized by using a pelletizer.

3. Heat treatment of the PET resin pellets by the nitrogen flow method (crystallization treatment and treatment for decreasing MHET, BHET and acetaldehyde).

15 Kilograms of the amorphous PET resin pellets produced by the melt-extrusion treatment were dried under a reduced pressure (under the conditions of 4 mmHg and 80°C for 8 hours) by using a stirrer type vacuum drier (45MV manufactured by Dalton Co.). The PET resin pellets after dried were crystallized (under the conditions of 4 mmHg and 150°C for 3 hours) and were heat-treated under predetermined conditions while opening the gas introduction valve and leakage valve and flowing nitrogen. The stirrer vanes were rotated at 20 rpm. The nitrogen gas was dried by being passed through the silica gel and was, thereafter, heated up to the temperature of the heat treatment and was introduced into the stirrer type vacuum drier at a flow rate of 10 L/min.

Heat treatment of the PET resin pellets by the reduced pressure method (crystallization treatment and treatment for decreasing MHET, BHET and acetaldehyde).

15 Kilograms of the amorphous PET resin pellets produced by the melt-extrusion treatment were dried under a reduced pressure (under the conditions of 4 mmHg and 80°C for 8 hours) by using the stirrer type vacuum drier (45MV manufactured by Dalton Co.). The PET resin pellets after dried were crystallized (under the conditions of 4 mmHg and 150°C for 3 hours) and were heat-treated under predetermined conditions of reduced pressure (4 mmHg). The stirrer vanes were rotated at 20 rpm.

5. Forming the preform.

The PET resin pellets after heat-treated were fed to an injection-forming machine. A preform for a 500-ml bottle weighing 25 g was prepared by setting the barrel temperature and the hot runner temperature at 300°C and the metal mold temperature at 15°C. The forming cycle was 25 seconds.

6. Evaluating the fouling on the surfaces of the heat-resistant blow metal molds (heat set test).

By adjusting the output of the infrared-ray heater mounted on a mouth portion-crystallizing device to be 1200 W, the mouth portion of the above preform was heated for 2 minutes and was crystallized. After the mouth portion was cooled down to a sufficient degree, the preform was biaxially stretch-blow-formed by the one-step blow-forming method and was, next, heat-set at 150°C for 2 seconds to prepare a heat-resistant PET bottle. After the preparation of the bottle was repeated 5000 times, the surface of the heat-resistant blow metal mold was observed. The case where the surface had not been fouled and the metal mold could be continuously used was represented by "O", the case where the surface had been fouled but the metal mold could be still used was represented by "Δ" and the case where the surface had been conspicuously fouled and the metal mold could not be used any more was represented by "×".

7. Evaluating the stretch formability of the PET resin.

By adjusting the output of the infrared-ray heater mounted on the mouth portion-crystallizing device to be 1200 W, the mouth portion of the above preform was heated for 2 minutes and was crystallized. After the mouth portion was cooled down to a sufficient degree, dots were printed on the body of the preform in the direction of the long axis thereof maintaining a gap of 1 cm, and the preform was biaxially stretch-blow-formed by the one-step blow-forming method and was, next, heat-set at 150°C for 2 seconds to prepare a heat-resistant PET bottle. The body of the prepared bottle was observed. The case where the dots were printed maintaining a uniform gap was represented by "○" and the case where the gaps among the dots were not uniform was represented by "×".

(Example 1)

Pellets of a solid phase polymerized PET resin having an intrinsic viscosity of 0.84 dl/g, containing a copolymerizable component (diethylene glycol) other than the ethylene glycol and terephthalic acid in an amount of 1.28 mol%, and containing the MHET and BHET in a total amount of 0.0038% by weight, were melt-extruded, pelletized again and were, thereafter, subjected to the crystallization treatment and heat treatment by the nitrogen flow method. The heat treatment conditions consisted of 180°C for 4 hours. After the heat treatment, the pellets were measured for their intrinsic viscosity, total amount of the MHET and BHET, heat of fusion and crystallinity. A preform was prepared from the heat-treated PET resin pellets and was measured for its intrinsic viscosity, total amount of the MHET and BHET and amount of the acetaldehyde. By using the thus prepared preform, the heat set was tested and the fouling on the surfaces of the metal molds was evaluated with the eye. Flavor-retaining property and stretch formability of the bottle were also evaluated.

(Example 2)

The pellets were melt-extruded, heat-treated and from which a preform was prepared in the same manner as in Example 1 but conducting the heat treatment by the reduced pressure method. After having taken the measurements of the pellets and the preform, the heat set was tested and the fouling on the surfaces of the metal molds was evaluated with the eye. Flavor-retaining property and stretch formability of the bottle were also evaluated.

(Example 3)

The pellets were melt-extruded, heat-treated and from which a preform was prepared in the same manner as in Example 1 but using the pellets of a solid phase polymerized PET resin having an intrinsic viscosity of 0.81 dl/g, containing a copolymerizable component (diethylene glycol) other than the ethylene glycol and terephthalic acid in an amount of 1.42 mol%, and containing the MHET and BHET in a total amount of 0.0042% by weight. After having taken the measurements of the pellets and the preform, the heat set was tested and the fouling on the surfaces of the metal molds was evaluated with the eye. Flavor-retaining property and stretch formability of the bottle were also evaluated.

(Example 4)

The pellets were melt-extruded, heat-treated and from which a preform was prepared in the same manner as in Example 1 but using the pellets of a solid phase polymerized PET resin having an intrinsic viscosity of 0.81 dl/g, containing a copolymerizable component (diethylene glycol) other than the ethylene glycol and terephthalic acid in an amount of 1.42 mol%, and containing the MHET and BHET in a total amount of 0.0042% by weight, and conducting the heat treatment by the reduced pressure method. After having taken the measurements of the pellets and the preform, the heat set was tested and the fouling on the surfaces of the metal molds was evaluated with the eye. Flavor-retaining property and stretch formability of the bottle were also evaluated.

(Comparative Example 1)

The pellets were melt-extruded and from which a preform was prepared in the same manner as in Example 1 but without heat-treating the pellets after the melt extrusion. After having taken the measurements of the pellets and the preform, the heat set was tested and the fouling on the surfaces of the metal molds was evaluated with the eye. Flavor-retaining property and stretch formability of the bottle were also evaluated.

(Comparative Example 2)

The pellets were melt-extruded and from which a preform was prepared in the same manner as in Example 1 but without melt-extruding the pellets of the solid phase polymerized resin. After having taken the measurements of the pellets and the preform, the heat set was tested and the fouling on the surfaces of the metal molds was evaluated with the eye. Flavor-retaining property and stretch formability of the bottle were also evaluated.

(Comparative Example 3)

A preform was prepared in the same manner as in Example 1 but neither melt-extruding nor heat-treating the pellets of the solid phase polymerized resin. After having taken the measurements of the pellets and the preform, the heat set was tested and the fouling on the surfaces of the metal molds was evaluated with the eye. Flavor-retaining property and stretch formability of the bottle were also evaluated.

(Comparative Example 4)

The pellets were melt-extruded, heat-treated and from which a preform was prepared in the same manner as in Example 1 but using the pellets of a solid phase polymerized PET resin having an intrinsic viscosity of 0.74 dl/g, containing a copolymerizable component (diethylene glycol) other than the ethylene glycol and terephthalic acid in an amount of 1.96 mol%, and containing the MHET and BHET in a total amount of 0.0040% by weight. After having taken the measurements of the pellets and the preform, the heat set was tested and the fouling on the surfaces of the metal molds was evaluated with the eye. Flavor-retaining property and stretch formability of the bottle were also evaluated.

(Comparative Example 5)

The pellets were melt-extruded, heat-treated and from which a preform was prepared in the same manner as in Example 1 but using the pellets of a solid phase polymerized PET resin having an intrinsic viscosity of 0.83 dl/g, containing a copolymerizable component (diethylene glycol) other than the ethylene glycol and terephthalic acid in an amount of 4.17 mol%, and containing the MHET and BHET in a total amount of 0.0021% by weight. After having taken the measurements of the pellets and the preform, the heat set was tested and the fouling on the surfaces of the metal molds was evaluated with the eye. Flavor-retaining property and stretch formability of the bottle were also evaluated.

Tables 1 and 2 show the results of the above Examples and Comparative Examples.

Table 1

| | * | Pellets before treated | | | | Pellets after treated | | | |
|---|---|---|---|---|---|---|---|---|---|
| | | IV (dL/g) | BHET + MHET (wt%) | Heat of fusion (J/g) | Crystallinity (%) | IV (dL/g) | BHET + MHET (wt%) | Heat of fusion (J/g) | Crystallinity (%) |
| Ex. 1 | 1.28 | 0.84 | 0.0038 | 67.34 | 66.2 | 0.84 | 0.0048 | 42.96 | 53.0 |
| Ex. 2 | 1.28 | 0.84 | 0.0038 | 67.34 | 66.2 | 0.84 | 0.0041 | 42.11 | 53.4 |
| Ex. 3 | 1.42 | 0.81 | 0.0042 | 64.30 | 66.0 | 0.81 | 0.0047 | 42.29 | 53.7 |
| Ex. 4 | 1.42 | 0.81 | 0.0042 | 64.30 | 66.0 | 0.81 | 0.0043 | 42.04 | 54.1 |
| Comp. Ex. 1 | 1.28 | 0.84 | 0.0038 | 67.34 | 66.2 | 0.83 | 0.0068 | 40.08 | 51.2 |
| Comp. Ex. 2 | 1.28 | 0.84 | 0.0038 | 67.34 | 66.2 | 0.84 | 0.0038 | 67.34 | 66.2 |
| Comp. Ex. 3 | 1.28 | 0.84 | 0.0038 | 67.34 | 66.2 | - | - | - | - |
| Comp. Ex. 4 | 1.96 | 0.74 | 0.0040 | 67.69 | 67.9 | 0.74 | 0.0069 | 42.48 | 52.1 |
| Comp. Ex. 5 | 4.17 | 0.83 | 0.0021 | 65.46 | 64.8 | 0.83 | 0.0031 | 41.93 | 46.6 |

*: Copolymerizable component (mol%)

Table 2

| | Preform | | | |
|---|---|---|---|---|
| | IV (dL/g) | Acetaldehyde contained | Metal mold fouled | Stretch formability |
| Ex. 1 | 0.81 | ○ | ○ | ○ |
| Ex. 2 | 0.81 | ○ | ○ | ○ |
| Ex. 3 | 0.78 | ○ | ○ | ○ |
| Ex. 4 | 0.79 | ○ | ○ | ○ |
| Comp. Ex. 1 | 0.81 | ○ | × | ○ |
| Comp. Ex. 2 | 0.77 | × | ○ | ○ |
| Comp. Ex. 3 | 0.78 | × | ○ | ○ |
| Comp. Ex. 4 | 0.71 | ○ | Δ | × |
| Comp. Ex. 5 | 0.83 | ○ | ○ | × |

Industrial Applicability:

The PET resin of the present invention has a high intrinsic viscosity, excellent stretch formability and excellent melting property, and makes it possible to improve the productivity owing to its stable formability and to improve the quality of the formed articles. Further, the PET resin pellets of the invention contain the MHET and BHET in small amounts, help decrease the frequency for cleaning the metal molds and, therefore, make it possible to improve the productivity and appearance such as transparency of the containers and, further, provide excellent flavor-retaining property as a result of containing the acetaldehyde in small amounts. Accordingly, the PET resin of the invention can be favorably used for mass-producing PET bottles for containing beverages and the like.

**Claims**

1. An ethylene terephthalate type polyester resin for forming containers, having an intrinsic viscosity in a range of 0.80 to 0.90 dL/g, containing monohydroxyethyl terephthalate and bishydroxyethyl terephthalate in a total amount of less than 0.005 mol%, and having a heat of fusion of not more than 50 J/g and a crystallinity of less than 60%.

2. The ethylene terephthalate type polyester resin for forming containers according to claim 1, wherein the content of the copolymerizable components other than the ethylene glycol and terephthalic acid is less than 1.5 mol%.

3. The ethylene terephthalate type polyester resin for forming containers according to claim 2, wherein the total amount of the diethylene glycol and isophthalic acid contained as said copolymerizable components is less than 1.5 mol%.

4. A preform comprising the ethylene terephthalate type polyester resin for forming containers of claim 1.

5. A blow-formed bottle formed by stretch-blowing the preform of claim 4.

6. A method of producing an ethylene terephthalate type polyester resin by melt-extruding and pelletizing an ethylene terephthalate type polyester resin having an intrinsic viscosity in a range of 0.80 to 0.90 dL/g obtained by the solid phase polymerization at a temperature T (°C) of Tm + 10 ≦ T ≦ Tm + 30 with the melting point Tm(°C) of said ethylene terephthalate type polyester resin as a reference, and heat-treating said pellets at a temperature of 160 to 220°C for not less than one hour but less than 5 hours.

7. The method of producing an ethylene terephthalate type polyester resin according to claim 6, wherein said heat treatment heat-treats the pellets at a temperature of 180 to 200°C for 3 to 4 hours.

8. The method of producing an ethylene terephthalate type polyester resin according to claim 6, wherein the ethylene terephthalate type polyester resin obtained by the solid phase polymerization is a polyethylene terephthalate that contains the copolymerizable components other than the ethylene glycol and terephthalic acid in an amount of less than 1.5 mol%.

<table>
<tr><td colspan="2" align="center">**INTERNATIONAL SEARCH REPORT**</td><td>International application No.<br>PCT/JP2012/067279</td></tr>
</table>

**A.  CLASSIFICATION OF SUBJECT MATTER**
*C08G63/183*(2006.01)i, *B65D1/00*(2006.01)i, *C08G63/88*(2006.01)i

According to International Patent Classification (IPC) or to both national classification and IPC

**B.   FIELDS SEARCHED**

Minimum documentation searched (classification system followed by classification symbols)
C08G63/00-63/91, B65D1/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>A | JP 2010-150487 A  (Toyo Seikan Kaisha, Ltd.),<br>08 July 2010 (08.07.2010),<br>claims; paragraphs [0007], [0016], [0019],<br>[0025]; example 6<br>& EP 2371874 A1          & WO 2010/074230 A1 | 1-5<br>6-8 |
| X<br>A | JP 2010-150488 A  (Toyo Seikan Kaisha, Ltd.),<br>08 July 2010 (08.07.2010),<br>claims; paragraphs [0007], [0019] to [0021],<br>[0027]<br>& EP 2371874 A1          & WO 2010/074230 A1 | 1-5<br>6-8 |

☒   Further documents are listed in the continuation of Box C.      ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    28 September, 2012 (28.09.12) | Date of mailing of the international search report<br>    09 October, 2012 (09.10.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/067279

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | WO 2006/059605 A1  (Asahi Kasei Chemicals<br>Corp.),<br>08 June 2006 (08.06.2006),<br>claims; paragraphs [0029] to [0045], [0138],<br>[0146] to [0150], [0199]<br>& US 2008/0260979 A1    & EP 1818352 A1 | 1-5<br>6-8 |
| X<br>A | JP 2010-241974 A  (Teijin Fibers Ltd.),<br>28 October 2010 (28.10.2010),<br>claims; paragraphs [0002], [0012] to [0014],<br>[0032], [0059], [0063]<br>(Family: none) | 1-5<br>6-8 |
| A | JP 2007-119644 A  (Toyo Seikan Kaisha, Ltd.),<br>17 May 2007 (17.05.2007),<br>claims; paragraphs [0013], [0017], [0026]<br>(Family: none) | 1-8 |
| A | JP 2010-235938 A  (Toyobo Co., Ltd.),<br>21 October 2010 (21.10.2010),<br>claims; paragraphs [0016], [0061], [0063],<br>[0079], [0104] to [0109]<br>(Family: none) | 1-8 |

Form PCT/ISA/210 (continuation of second sheet) (July 2009)

**EP 2 730 601 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010150488 A
- JP 2010150487 A